# EUROPÄISCHE PATENTSCHRIFT

(11) **EP 1 914 407 B1**
(45) Veröffentlichungstag und Bekanntmachung des Hinweises auf die Patenterteilung: **04.01.2012**
(21) Anmeldenummer: 07115606.1
(22) Anmeldetag: 04.09.2007
(51) Int. Cl.: F02C 6/00

(54) **Verfahren zum Betrieb einer Gasturbinenanlage**
Method for operating a gas turbine plant
Procédé de mise en oeuvre d' une turbine à gaz

(30) Priorität: 16.10.2006 CH 16492006
(43) Veröffentlichungstag der Anmeldung: 23.04.2008
(73) Patentinhaber: Alstom Technology Ltd, 5400 Baden (CH)
(72) Erfinder: Lilley, Darrel, 5453, Remetschwil (CH); Lindvall, Rolf Anders, 5430, Wettingen (CH); Ruecker, Falk, 5415, Nussbaumen (CH); Lachner, Rudolf, 5432, Neuenhof (CH)

(56) Entgegenhaltungen:
- EP-A1- 0 646 704
- EP-A1- 0 646 705
- DE-A1- 2 648 628
- US-A- 3 054 257

## Beschreibung

### Technisches Gebiet

Die vorliegende Erfindung bezieht sich auf das Gebiet der Energieerzeugung unter Einsatz von Gasturbinen. Sie betrifft ein Verfahren zum Betrieb einer Gasturbinenanlage gemäss dem Oberbegriff des Anspruchs 1.

### Stand der Technik

In der Technik der stationären Gasturbinen, wie sie in Kombikraftwerken eingesetzt werden, sind seit Längerem Gasturbinenanlagen mit sequentieller Verbrennung bekannt, bei denen das aus einer ersten Brennkammer kommende Heissgas in einer ersten Turbine entspannt, anschliessend in eine zweite Brennkammer eingeführt und dort zwischenerhitzt wird, und schliesslich in einer zweiten Turbine noch einmal Arbeit leistet (siehe Z. B. die Druckschriften EP-A1- 0 620 362, EP-A1-646 705 oder EP-A2-0 718 470 oder die Artikel von D.K. Mukherjee, "State-of-the-art gas turbines - a brief update", ABB Review 2/1997, S. 4-14, und F. Joos et al., "Entwicklung des sequentiellen Verbrennungssystems für die Gasturbinenfamilie GT24/GT26", ABB Technik 4/1998, S. 4-16). Bei den bekannten Gasturbinen der Typen GT24 und GT26 sind in der ersten Brennkammer sogenannte EV-Brenner, in der zweiten Brennkammer sogenannte SEV-Brenner eingesetzt. Alle genannten Druckschriften bilden einen integrierenden Bestandteil dieser Anmeldung.

Auf den heutigen Energiemärkten ist die Flexibilität des Betriebs eines Kraftwerkes von ausschlaggebender Bedeutung für den kommerziellen Erfolg. Es besteht daher ein grosser Bedarf an Flexibilität und es wird erwartet, dass die Kraftwerke in der Lage sind, zwischen den Extremen des täglichen Bedarfs, Start-und-Stop-Betriebs und des Grundlastbetriebs, zu arbeiten.

Für diesen flexiblen Einsatz haben sich die eingangs erwähnten Gasturbinenanlagen mit sequentieller Verbrennung (z.B. die Typen GT24/GT26) bestens bewährt, weil sie
- eine hohe Zuverlässigkeit beim Aufstarten haben,
- flexibel im Lastbereich zwischen 40% und 100% betrieben werden können,
- im Teillastbetrieb einen hohen Wirkungsgrad und niedrige Emissionswerte aufweisen, und
- bezüglich der Zusammensetzung von gasförmigen Brennstoffen flexibel sind und auch wahlweise mit flüssigen und gasförmigen Brennstoffen betrieben werden können (dual fuel capability), oder auch mit flüssigen und/oder gasförmigen Brennstoffen gefahren werden können.

Es gibt jedoch Zeiten mit sehr geringer Nachfrage an elektrischer Energie, in denen ein Betrieb bei Teillast gemessen am Bedarf immer noch zu hoch ist, oder wegen der niedrigen Tarife und hohen Brennstoffkosten, eben wegen dieses geringen Bedarfs, nicht wirtschaftlich ist. Der Betreiber befindet sich dann in dem Dilemma, entweder die Anlage bei relativ höherer Teillast zu fahren, um die Grenzen bzgl. der Emissionswerte einzuhalten, oder die Anlage vorübergehend ganz abzuschalten, was bei der Wiederinbetriebnahme einen neuen Startvorgang nötig macht, was aus vielen technischen und wirtschaftlichen Ueberlegungen an sich immer zu vermeiden ist.

### Darstellung der Erfindung

Es ist daher Aufgabe der Erfindung, ein Verfahren zum Betrieb einer Gasturbinenanlage mit sequentieller Verbrennung anzugeben, mit welcher sich dieses Dilemma überwinden lässt, ohne auf die innewohnenden Vorteile der hier beschriebenen Anlage mit einer sequentiellen Verbrennung verzichten zu müssen.

Die Aufgabe wird durch die Gesamtheit der Merkmale des Anspruchs 1 gelöst. Wesentlich für die Erfindung ist, dass zur Erreichung eines sehr niedrigen Teillastbetriebs der Gasturbinenanlage die zweite Brennkammer, auch Niederdruck-Brennkammer genannt, vollständig abgeschaltet wird. Hierdurch kann nunmehr ein sehr niedriger Teillastbetrieb erreicht werden, ohne dass die Verbrennung in der ersten Brennkammer, auch Hochdruck-Brennkammer genannt, bzgl. Emissionswerten und Temperaturverteilung in irgendeiner Weise beeinflusst wird. Insbesondere ist es dadurch nicht nötig, in der ersten Brennkammer auf den Betrieb der Brenner Brenner einzuwirken, beispielsweise indem diese Brenner gruppenweise abgeschalten und/oder mit einem fetten Brennstoff/Luft-Gemisch gefahren werden.

Es wird daher vorgesehen, die erste Brennkammer während der Zeit, in welcher die zweite Brennkammer abgeschaltet ist, in einem mageren Vormischbetrieb zu betreiben, was sich weiterhin auf die hervorragenden niedrigen Emissionswerte dieser Anlage auswirkt.

Ebenso lassen sich alle Brenner in der ersten Brennkammer während der Zeit, in welcher die zweite Brennkammer abgeschaltet ist, betreiben, wenn die Verteilung der Brenner in ringförmiger Konfiguration vorliegt.

Ein wesentlicher Vorteil der Erfindung ist somit darin zu sehen, dass die Gasturbinenanlage im niedrigen Teillastbetrieb mit einer relativen Last (RL) von weniger als 20% betreibbar ist, womit sich für den Betreiber jene Möglichkeiten eröffnen, welche einen höchst flexiblen Betrieb zulassen, insbesondere steht dem Betreiber nunmehr die Möglichkeit offen, die Anlage überhaupt nicht ausser Betrieb zu setzen und sie dann später wieder Hinauffahren zu müssen.

Wenn die Gasturbinenanlage Teil eines Kombikraftwerks mit einem Wasser/Dampf-Kreislauf, einer Dampfturbine und einem von den Abgasen der Gasturbinenanlage durchströmten Abhitzedampferzeuger ist, wird vorzugsweise das Kombikraftwerk im niedrigen Teillastbetrieb insgesamt mit einer relativen Last (RL) von weniger als 25% betrieben, was nunmehr ohne weiteres möglich ist, und damit den weiteren Vorteil bietet, dass bei erhöhtem Strombedarf unmittelbar reagiert werden kann.

Vorteilhafte und zweckmässige Weiterbildungen der erfindungsgemässen Aufgabenlösung sind in den weiteren abhängigen Ansprüchen gekennzeichnet.

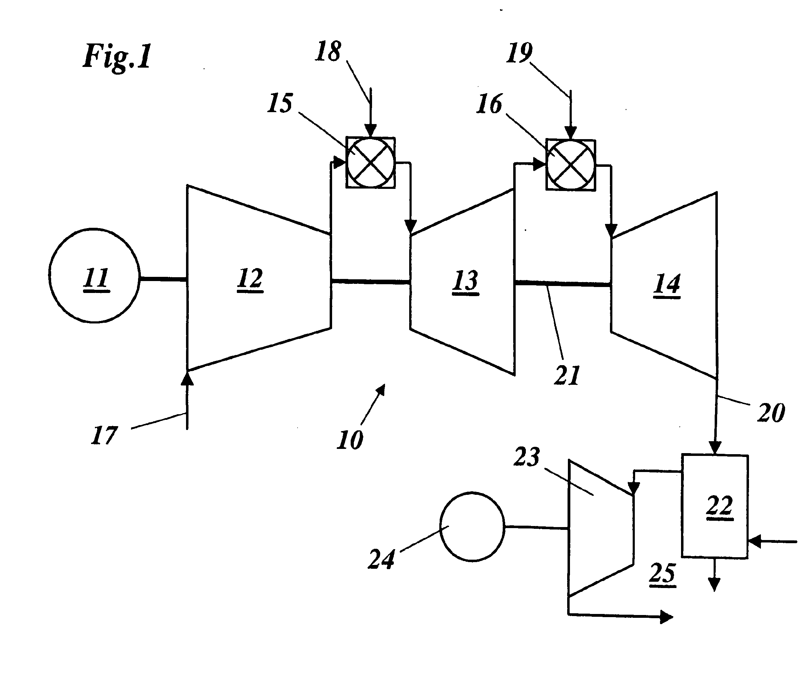

Im folgenden wird anhand der die Zeichnung bildenden Figuren Ausführungsbeispiele der Erfindung näher erläutert. Alle für das unmittelbare Verständnis der Erfindung nicht erforderlichen Elemente sind fortgelassen. Die Strömungsrichtung der Medien, insbesondere was auf Fig. 1 zutrifft, sind mit Pfeilen angegeben.

### Kurze Erläuterung der Figuren

Es zeigen
- Fig. 1: ein stark vereinfachtes Anlagenschema eines Kombikraftwerks mit einer Gasturbinenanlage mit sequentieller Verbrennung, wie es für das Verfahren nach der Erfindung geeignet ist;
- Fig. 2: den zeitlichen Verlauf der relativen Last einer Gasturbinenanlage mit sequentieller Verbrennung bei einem zeitlich begrenzten Teillastbetrieb bei herkömmlicher Fahrweise (durchgezogene Kurve A) und nach der Erfindung (strichpunktierte Kurve B); und
- Fig. 3: den zeitlichen Verlauf verschiedener Betriebsgrössen in einem Kombikraftwerk bei einem zeitlich begrenzten Teillastbetrieb nach der Erfindung.

### Wege zur Ausführung der Erfindung, gewerbliche Anwendbarkeit

In Fig. 1 ist ein stark vereinfachtes Anlagenschema eines Kombikraftwerks mit einer Gasturbinenanlage mit sequentieller Verbrennung wiedergegeben, wie es für das Verfahren nach der Erfindung geeignet ist. Es versteht sich von selbst, dass die Erfindung aber auch bei einer Gasturbinenanlage mit sequentieller Verbrennung Anwendung finden kann, welche Gasturbinenanlage nicht Teil eines Kombikraftwerks ist.

Das Kombikraftwerk der Fig. 1 umfasst im Wesentlichen eine Gasturbinenanlage 10 mit sequentieller Verbrennung und einen Wasser/Dampf-Kreislauf 25, die über einen Abhitzedampferzeuger (Heat Recovery Steam Generator HRSG) 22 miteinander gekoppelt sind. Die Gasturbinenanlage (Gasturbogruppe) 10 umfasst einen Verdichter 12, eine erste Brennkammer 15 mit einer ersten nachgeschalteten Turbine 13, und eine zweite Brennkammer 16 mit einer nachgeschalteten zweiten Turbine 14. Verdichter 12 und Turbinen 13, 14 sind durch eine Welle 21 miteinander verbunden. Über die Welle 21 wird ein erster Generator 11 zur Erzeugung elektrischer Energie angetrieben. Im Wellenstrang können auch Getriebe oder Kupplungen vorgesehen werden. Der tatsächliche Aufbau einer solchen Gasturbinenanlage (z.B. vom Typ GT26) ist aus den eingangs genannten Druckschriften ABB Review 2/1997 und ABB Technik 4/1998 oder aus der Druckschrift EP 0 620 362 A1 zu entnehmen.

Der Verdichter 12 saugt Verbrennungsluft über den Lufteinlass 17 an und verdichtet sie. Die verdichtete Luft wird in die erste Brennkammer 15 eingeführt und dort zur Verbrennung eines über die erste Brennstoffzufuhr 18 eingedüsten ersten Brennstoffs herangezogen. Die heissen Verbrennungsgase, die noch einen Anteil an Sauerstoff enthalten, werden in der ersten (Hochdruck-)Turbine 13 unter Arbeitsleistung entspannt und anschliessend in die zweite Brennkammer 16 geleitet, wo der Sauerstoff zur Verbrennung eines durch die zweite Brennstoffzufuhr 19 zugeführten zweiten Brennstoffs eingesetzt wird. Die heissen Gase aus der zweiten Brennkammer 16 kommen in der zweiten Turbine 14 unter Arbeitsleistung zur Entspannung und anschliessend über eine Zuleitung 20 an den Abhitzedampferzeuger 22 abgegeben, der in den Wasser/Dampf-Kreislauf 25 eingeschaltet ist und Dampf für eine Dampfturbine 23 erzeugt. Die Dampfturbine 23 treibt in diesem Beispiel einen weiteren Generator 24 an, kann aber auch mit dem Generator 11 gekoppelt sein. Weitere Elemente des Wasser/Dampf-Kreislaufs wie Kondensator, Speisewasserkessel, Speisewasserpumpe etc. sind der Einfachheit halber in Fig. 1 weggelassen, dem Fachmann aber bekannt.

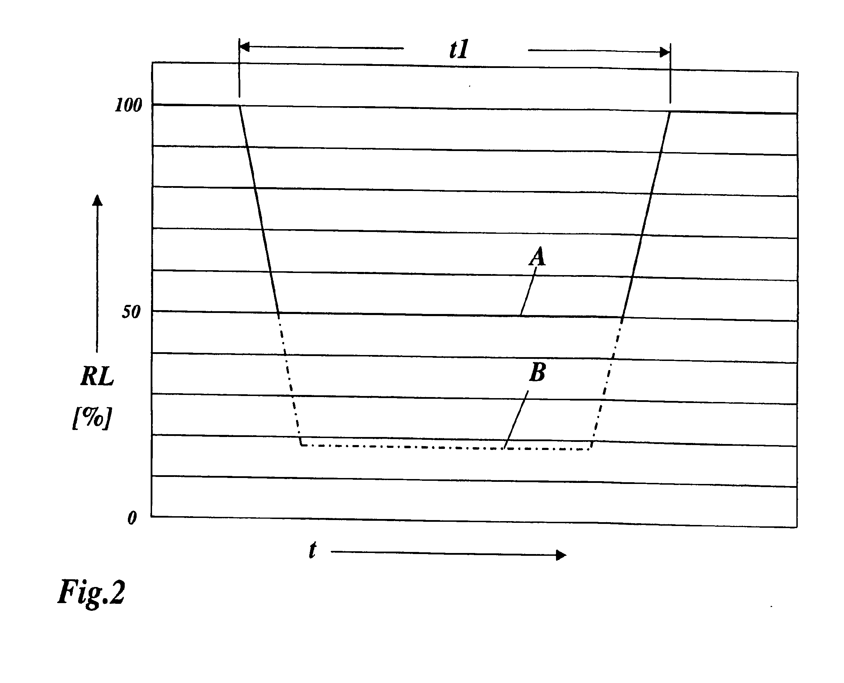

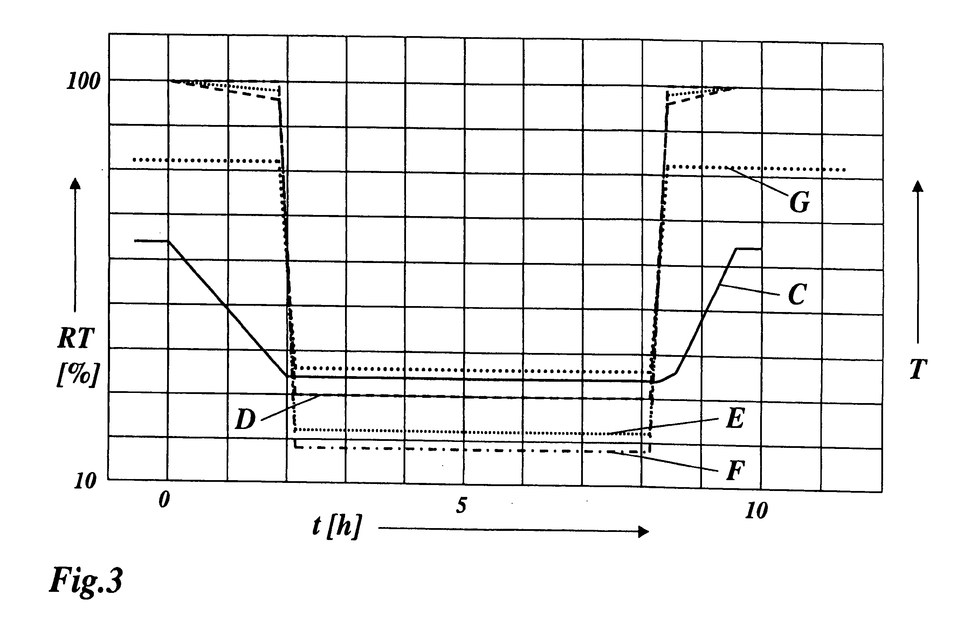

In einer beispielhaften Anlage gemäss Fig. 1 kann nun zur Erreichung günstiger thermischer und Emissionsbedingungen bei niedriger Teillast die zweite Brennkammer 16 ganz abgeschaltet werden, d.h. die aus der ersten Turbine 13 kommenden Heissgase durchströmen die zweite Brennkammer 16 auf dem Weg zur zweiten Turbine 14, ohne dass über die zweite Brennstoffzufuhr 19 der zweite Brennstoff eingedüst wird. Diese Art des Betriebes (mit abgeschalteter sequentieller Verbrennung durch die SEV-Brenner in der zweiten Brennkammer 16) ist daher exklusiv auf Gasturbinenanlagen mit sequentieller Verbrennung beschränkt. Die Gasturbinenanlage 10 kann auf diese Weise unter Einhaltung der Emissionsvorschriften und mit einer homogenen Verteilung der Turbineneinlasstemperatur im mageren Vormischbetrieb (lean premix mode) für einen Zeitraum t1, in dem entweder die Nachfrage nach Energie gering und/oder der Preis für die erzeugte Elektrizität abgesunken ist, bei einer Teillast von weniger als 20% betrieben werden (siehe Fig. 2, Kurve B). Entsprechend kann die Kombianlage mit einer sehr niedrigen Teillast des Kombikreislaufs von etwa 20-25% betrieben werden (siehe Kurve E in Fig. 3), wobei der Wasser/Dampf-Kreislauf aufrechterhalten wird und jederzeit nach oben gefahren werden kann.

Eine vereinfachte Darstellung des zeitlichen Verhaltens verschiedener Parameter bei einem solchen intermediären Absenken des Betriebs der Kombianlage auf eine sehr niedrige Teillast ist in Fig. 3 dargestellt, wobei die Kurven G und C Temperaturkurven der Auslasstemperatur der Gasturbinenanlage bzw. der Dampftemperatur im Hochdruckteil (High Pressure HP) und an der heissen Seite des Zwischenüberhitzers (Hot Reheat HRH) darstellen (rechte Skala), und die Kurven D, E und F die relative Last RL (in %) der Dampfturbine bzw. des Kombikreislaufs bzw. der Gasturbinenanlage zeigen (linke Skala). Man erkennt an der Darstellung in Fig. 3, dass beim Wiederhochfahren der Last am Ende der Absenkungsperiode weder ein Spülen des Abhitzedampferzeugers, noch ein Hochfahren der Gasturbine und Dampfturbine auf Leerlaufdrehzahl, noch eine neue Synchronisierung notwendig sind, sondern dass die Last schnell und einfach hochgefahren werden kann.

Insgesamt hat die erfindungsgemässe Betriebsweise (Absenkung der Teillast mit Abschalten der sequentiellen Verbrennung) die folgenden Charakteristika und Vorteile:
- Es werden Start-Stop-Zyklen und damit die zyklische thermische Belastung der entsprechenden Anlagenteile vermieden.
- Die Wartungskosten und Wartungsintervalle werden nicht negativ beeinflusst.
- Es wird dadurch ein ausreichender Wirkungsgrad der Anlage und gleichzeitig ein niedriger Brennstoffverbrauch ermöglicht.
- Es können im niedrigen Teillastbetrieb niedrige Emissionswerte erreicht werden, die nahe an denen bei Grundlast liegen, oder sogar entsprechend sind.
- Es wird eine (drehende) Betriebsreserve bereitgestellt, die bei Bedarf schnell und einfach abrufbar ist. Die normale Hochfahrfähigkeit des Kombikraftwerks bleibt dabei weitgehend erhalten.
- Die Fahrweise erlaubt ein schnelles Hochfahren der Last, um hohe Preisspannen zwischen Brennstoffpreis und kWh-Preis (sog. "spark spreads") auszunutzen, wenn sie auftreten, da keine mit einem Anfahren verbundenen Verzögerungen durch Anlagenvorbereitung, Anfahren der Gasturbine, Spülen des Abhitzedampferzeugers, Anwärmen des Wasser/Dampf-Kreislaufs etc., entstehen.
- Es wird das potentielle Risiko eines Fehlstarts vermieden, da die Anlage in Betrieb bleibt.
- Es wird die Emission von zusätzlichem Lärm und Wasserdampffahnen vermieden, die während einer Startphase auftreten können.
- Gegenüber dem bisherigen "Parken" der Anlage bei höheren Teillasten (z.B. 40%) werden die Emissionen insgesamt erheblich reduziert.
- Es wird eine homogene Verteilung der Turbineneinlasstemperatur in der Gasturbine sichergestellt, was bei Maschinen ohne sequentielle Verbrennung wegen des dort notwendigen Pilotbetriebes oder stufenweisen Betriebes (mit verschiedenen Brennergruppen) nicht möglich ist.

### BEZUGSZEICHENLISTE

- 10: Gasturbinenanlage (mit sequentieller Verbrennung)
- 11,24: Generator
- 12: Verdichter
- 13,14: Turbine
- 15,16: Brennkammer
- 17: Lufteinlass
- 18,19: Brennstoffzufuhr
- 20: Abgasauslass
- 21: Welle
- 22: Abhitzedampferzeuger
- 23: Dampfturbine
- 25: Wasser/Dampf-Kreislauf
- A,..,G: Kurve
- RT: relative Last
- t1: Zeitraum

## Patentansprüche

1. Verfahren zum Betrieb einer Gasturbinenanlage (10) im wesentlichen bestehend aus mindestens einem Verdichter (12) zur Verdichtung von angesaugter Verbrennungsluft, aus einer stromab des Verdichters wirkenden ersten Brennkammer (15) zur Verbrennung eines ersten Brennstoffs mittels der verdichteten Verbrennungsluft, aus einer stromab der ersten Brennkammer (15) wirkenden ersten Turbine (13), aus einer stromab der ersten Turbine wirkendenden zweiten Brennkammer (16) zur Verbrennung eines zweiten Brennstoffs mittels der aus der ersten Turbine (13) austretenden Gase, aus einer stromab der zweiten Brennkammer (16) nachgeschalteten zweiten Turbine (14), wobei zur Erreichung eines niedrigen Teillastbetriebs der Gasturbinenanlage (10) die zweite Brennkammer (16) vollständig abgeschaltet wird, **dadurch gekennzeichnet, dass** die erste Brennkammer (15) während der Zeit (t1), in welcher die zweite Brennkammer (16) abgeschaltet ist, in einem mageren Vormischbetrieb betrieben wird, dergestalt, dass in der ersten Brennkammer (15) eine Vielzahl von einzelnen Brennern verteilt angeordnet sind, und dass während der Zeit (t1), in welcher die zweite Brennkammer (16) abgeschaltet ist, alle Brenner der ersten Brennkammer (15) betrieben werden.

2. Verfahren nach Anspruch 1, **dadurch gekennzeichnet, dass** die Gasturbinenanlage (10) im niedrigen Teillastbetrieb mit einer relativen Last (RL) von weniger als 20% betrieben wird.

3. Verfahren nach einem der Ansprüche 1 bis 2, **dadurch gekennzeichnet, dass** die Gasturbinenanlage (10) Teil eines Kombikraftwerks (10, 25) mit einem Wasser/Dampf-Kreislauf (25), einer Dampfturbine (23) und einem von den Abgasen der Gasturbinenanlage (10) durchströmten Abhitzedampferzeuger (22) ist, und dass das Kombikraftwerk (10, 25) im niedrigen Teillastbetrieb insgesamt mit einer relativen Last (RL) von weniger als 25% betrieben wird.

## Claims

1. Method for operating a gas turbine plant (10) essentially consisting of at least one compressor (12) for the compression of sucked-in combustion air, of a first combustion chamber (15), acting downstream of the compressor, for the combustion of a first fuel by means of the compressed combustion air, of a first turbine (13), acting downstream of the first combustion chamber (15), of a second combustion chamber (16), acting downstream of the first turbine, for the combustion of a second fuel by means of the gases emerging from the first turbine (13), and of a second turbine (14) following the second combustion chamber (16) downstream, the second combustion chamber (16) being cut off completely in order to achieve low part-load operation of the gas turbine plant (10), **characterized in that**, during the time (t1) in which the second combustion chamber (16) is cut off, the first combustion chamber (15) is operated in a lean premixing mode, in such a way that a multiplicity of individual burners are arranged, distributed, in the first combustion chamber (15), and **in that**, during the time (t1) in which the second combustion chamber (16) is cut off, all the burners of the first combustion chamber (15) are operated.

2. Method according to Claim 1, **characterized in that** the gas turbine plant (10) is operated, in low part-load operation, with a relative load (RL) of less than 20%.

3. Method according to either one of Claims 1 and 2, **characterized in that** the gas turbine plant (10) is part of a combined-cycle power station (10, 25) with a water/steam circuit (25), with a steam turbine (23) and with a waste-heat recovery steam generator (22) through which the exhaust gases from the gas turbine plant (10) flow, and **in that** the combined-cycle power station (10, 25) is operated, in low part-load operation, overall with a relative load (RL) of less than 25%.

## Revendications

1. Procédé de conduite d'une installation de turbine à gaz (10) composée essentiellement d'au moins un compresseur (12) pour la compression de l'air de combustion aspiré, d'une première chambre de combustion (15) opérant en aval du compresseur pour la combustion d'un premier combustible au moyen de l'air de combustion comprimé, d'une première turbine (13) opérant en aval de la première chambre de combustion (15), d'une deuxième chambre de combustion (16) opérant en aval de la première turbine pour la combustion d'un deuxième combustible au moyen des gaz sortant de la première turbine (13), d'une deuxième turbine (14) installée en aval de la deuxième chambre de combustion (16), dans lequel on arrête complètement la deuxième chambre de combustion (16) pour atteindre une marche à faible charge partielle de l'installation de turbine à gaz (10), **caractérisé en ce que** la première chambre de combustion (15) est opérationnel à pré-mélange maigre pendant le temps (t1) où la deuxième chambre de combustion (16) est arrêtée, de telle manière qu'une pluralité de brûleurs soient répartis dans la première chambre de combustion (15), et que pendant le temps (t1), où la deuxième chambre de combustion (16) est arrêtée, tous les brûleurs de la première chambre de combustion (15) sont opérationnels.

2. Procédé selon la revendication 1, **caractérisé en ce que** l'on fait fonctionner l'installation de turbine à gaz (10) en marche à faible charge partielle avec une charge relative (RL) de moins de 20 %.

3. Procédé selon l'une quelconque des revendications 1 à 2, **caractérisé en ce que** l'installation de turbine à gaz (10) fait partie d'une centrale combinée (10, 25) avec un circuit eau/vapeur (25), une turbine à vapeur (23) et un générateur de vapeur à récupération de chaleur (22) parcouru par les gaz d'échappement de l'installation de turbine à gaz (10), et **en ce que** l'on fait fonctionner la centrale combinée (10, 25) en marche à faible charge partielle au total avec une charge relative (RL) de moins de 25 %.
